# FASCICULE DE BREVET EUROPEEN

(11) **EP 0 442 559 B1**
(45) Date de publication et mention de la délivrance du brevet: **25.01.1995**
(21) Numéro de dépôt: 91200216.9
(22) Date de dépôt: 05.02.1991
(51) Int. Cl.: F16K 3/08, F16K 11/074

(54) **Plaque fixe pour un robinet hydraulique, avec moyens pour l'évacuation des débris**
Feste Scheibe für hydraulischen Hahn mit Mitteln zur Abfuhr von festen Rückständen
Fixed disc for hydraulic faucet, with means to evacuate the debris

(30) Priorité: 13.02.1990 IT 6710390
(43) Date de publication de la demande: 21.08.1991
(73) Titulaire: STUDIO TECNICO SVILUPPO E RICERCHE S.T.S.R. s.r.l., I-46025 Poggio Rusco (Mantova) (IT)
(72) Inventeur: Knapp, Francesco, I-27100 Pavia (IT)
(74) Mandataire: Patrito, Pier Franco, Dr. Ing.

(56) Documents cités:
- EP-A- 0 326 839
- EP-A- 0 329 800
- DE-U- 8 715 044
- FR-A- 2 445 305
- FR-A- 2 524 105
- GB-A- 2 045 460

## Description

La présente invention a pour objet une plaque fixe en matériau dur pour un robinet hydraulique, comme décrite dans le préambule de la revendication 1, du type comportant une ouverture de passage unique disposée en position asymétrique par rapport au centre de la plaque.

Une plaque fixe de ce type est généralement connue, voir par exemple LP-A-0.326.839, et utilisée en formant une paire avec une plaque mobile similaire, et cette paire de plaques est montée dans le robinet entre un raccord d'entrée et un raccord de sortie. Chacune de ces deux plaques est limitée sur une face de travail par une surface plane rodée, et les surfaces rodées des deux plaques sont disposées en contact mutuel et sont capables de produire une étanchéité hydraulique. La plaque mobile est disposée de sorte qu'on peut la faire tourner par rapport à la plaque fixe moyennant un organe de commande, de sorte que, quand les ouvertures de passage des deux plaques se correspondent, le robinet autorise le passage d'un débit maximum, quand les ouvertures de passage des deux plaques sont en une position diamétralement opposée le flux est intercepté, et dans les positions intermédiaires le passage d'un débit partiel est autorisé. Le champ de manoeuvre d'un tel robinet est de 180° environ.

Ces paires de plaques comportent un problème particulier. Du fait que l'ouverture de passage se trouve en une position asymétrique, la sollicitation appliquée aux plaques par la pression de l'eau est asymétrique elle-aussi, et elle donne lieu à des concentrations d'efforts. Les matériaux durs constituant les plaques sont en général considerablement fragiles, et de ce fait le déplacement des plaques sous une sollicitation asymétrique avec des concentrations d'efforts donne lieu à des très petits ébrèchements, auxquels s'ensuit la formation de débris minuscules de matériau dur. Ces débris restent emprisonnés entre les surfaces planes rodées des deux plaques, desquelles ils ont été détachés, et ils ne peuvent pas s'échapper facilement parce que ces surfaces occupent l'aire toute entière des plaques, avec la seule exception de l'ouverture de passage. Avec le temps, ces débris produisent des rainures sur les surfaces rodées, compromettant ainsi le comportement parfait du robinet.

L'inconvénient qu'on a décrit ne se vérifie pas, au contraire, avec certaines plaques, similaires de celles considérées mais comportant deux ouvertures de passage diamétralement opposées entr'elles, voir par exemple EP-A-0.329.800. Dans ce cas les forces appliquées par la pression de l'eau sont toujours symétriques; ces forces symétriques ne donnent pas lieu à des concentrations d'efforts, et ne produisent donc pas d'ébrèchements, ni des débris de matériau dur. Toutefois les plaques comportant cette disposition symétrique des ouvertures de passage ont un champ de manoeuvre de seulement 90°, lequel est trop limité pour autoriser une commande facile et précise du robinet.

Suivant le document FR-A-2.524.105, un disque de robinet présente dans la surface d'étanchéité une pluralité de petites cavités, ainsi que, seulement dans la région de la surface d'étanchéité qui n'est jamais découverte, des cavités plus grandes. Ces cavités peuvent, entre autre, stocker les débris provenant du frottement des deux disques. Toutefois, du fait de la disposition des cavités, les débris y contenus ne peuvent pas être facilement emportés par l'eau, par conséquent s'y accumulent et ne peuvent sortir des cavités qu'en pénétrant entre les surfaces rodées des plaques, provoquant ainsi les inconvénients mentionnés.

Partant de ces considérations, le but de la présente invention est de perfectionner une plaque fixe pour robinet, du type comportant une ouverture de passage unique disposée en position asymétrique par rapport au centre de la plaque, de sorte à prévenir les dommages de la surface rodée d'étanchéité hydraulique provoqués par les débris de matériau dur résultant des ébrèchements des surfaces de la plaque fixe elle-même et de la plaque mobile coopérant avec elle, et cela en rendant possible 1' évacuation de ces débris.

Ce but est atteint, suivant l'invention, par les caractéristiques de la revendication 1.

La disposition décrite ne préjuge nullement l'étanchéité du robinet, parce que toute la partie de surface de la face rodée de travail, entourant l'ouverture de passage, demeure à un niveau uniforme et est capable de coopérer correctement avec la face de travail de la plaque mobile constituant la paire avec la plaque fixe. De plus, la partie de la face de travail de la plaque fixe, appartenant à la surface opposée à l'ouverture de passage par rapport au centre de la plaque et qui est disposée au même niveau que la partie de surface entourant l'ouverture de passage, assure un appui correct de la plaque mobile coopérant avec la plaque fixe, et empêche que, sous l'action des sollicitations asymétriques qui se vérifient, la plaque mobile puisse prendre une inclinaison par rapport à la plaque fixe. Mais, grâce à la présence d'une partie abaissée, ou partie basse, de ladite surface de la face de travail de la plaque fixe, les débris qui se trouvent entre les surfaces rodées des deux plaques coopérantes sont rapidement évacués hors de ces surfaces rodées, comme conséquence du déplacement mutuel des deux plaques, à l'occasion de toute manoeuvre du robinet. En outre, ces débris ne peuvent plus pénétrer entre les surfaces rodées des plaques, et ne peuvent pas s'accumuler dans la partie basse parce que celle-ci est ouverte vers la périphérie de la plaque, et que les débris sont emportés par le flux d'eau parcourant le robinet.

De préférence ladite partie basse de la face de travail de la plaque est limitée, par rapport à la partie non baissée, ou partie haute, par des arêtes qui, au moins en partie, ne sont pas concentriques par rapport au centre géométrique de la plaque. Par cette disposition, à l'occasion de chaque déplacement de la plaque mobile s'avère un phénomène de brossage de sa surface rodée par l'arête de la partie de surface non baissée de la face de travail de la plaque fixe, et cette action de brossage emporte positivement les débris qui se trouvent sur la surface rodée de la plaque mobile, en les faisant tomber sur la partie baissée de surface de la plaque fixe, de laquelle ils sont ensuite emportés par le flux d'eau.

Ladite action de brossage montre la plus grande efficacité si au moins une partie des arêtes séparant la partie baissée de la plaque de la partie non baissée est orientée en une direction substantiellement radiale par rapport au centre géométrique de la plaque.

Ces caractéristiques et d'autres, et les avantages de l'objet de l'invention, ressortiront plus clairement de la suivante description de certains modes de réalisation de l'invention, donnés à titre d'exemples mais sans aucun caractère de limitation, et montrés schématiquement dans les dessins annexés, dans lesquels:
Fig. 1 montre, en vue frontale du côté de la face de travail, une plaque mobile du type destiné à coopérer avec une plaque fixe du type considéré par l'invention;
Fig. 2 montre, en vue frontale du côté de la face de travail, une plaque fixe du type auquel l'invention peut être appliquée, mais dans sa conformation habituelle, non perfectionnée par l'invention;
Figs. 3 à 5 montrent, de façon similaire de la figure 2, trois modes dans lesquels l'invention peut être appliquée à une plaque fixe;
Fig. 6 montre une section, faite suivant la ligne VI-VI, de la plaque fixe représentée dans la figure 5; et
Fig. 7 montre la section axiale d'un robinet dit fileté, dans lequel on peut employer les plaques suivant les figures 1 à 5.

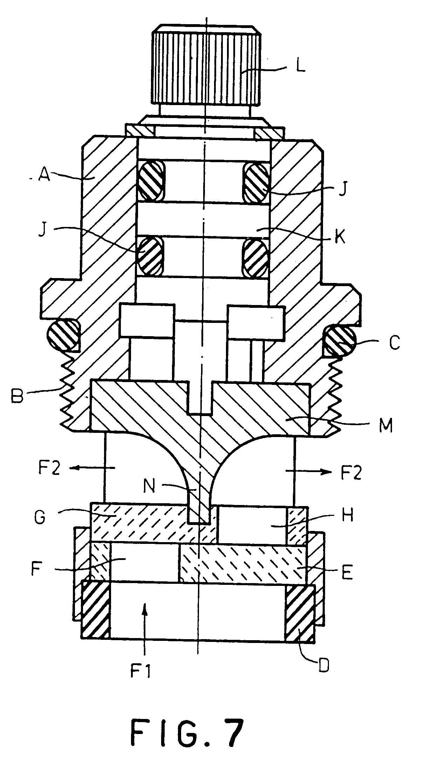

Faisant référence d'abord à la figure 7, un robinet dit fileté, du type considéré pour l'application de cette invention, comporte un corps de robinet A destiné à être vissé, moyennant un filetage B, dans un collecteur (non représenté) d'un groupe de robinetterie, de façon étanche grâce à une garniture C. La partie inférieure du corps de robinet A est destinée à communiquer, à travers une garniture D, avec une ouverture d' entrée pour le flux d'eau à contrôler, lequel pénètre suivant la flèche Fl et arrive ensuite dans le collecteur en traversant des ouvertures latérales du corps de robinet A, suivant les flèches F2. Une plaque fixe E en matériau dur, comportant une ouverture de passage asymétrique F, est montée dans le corps A sur la garniture D de sorte à ne pas pouvoir tourner. Une plaque mobile G, comportant elle-aussi une ouverture de passage asymétrique H, est superposée à la plaque fixe E, en contact avec elle et de sorte à pouvoir tourner. Dans la position représentée, les ouvertures de passage F et H des deux plaques E et G ne se correspondent pas, le robinet est donc en position de fermeture. Comme on le comprend, en faisant tourner de 180° la plaque mobile G, les deux ouvertures de passage vont se correspondre, autorisant ainsi le passage du flux. Dans le corps A est installée, de façon étanche grâce à des garnitures J, une tige K pourvue à son extrémité externe d'une tige de commande L pour une poignée de commande (non représentée). Sur son extrémité interne, la tige K comporte une tête de commande M qui, moyennant une clavette N, engage la plaque mobile G et lui impose toute rotation appliquée à la tige K par la poignée de commande. Les plaques E et G de matériau dur constituent les organes de contrôle du flux, et à la plaque fixe E peut être appliquée la présente invention.

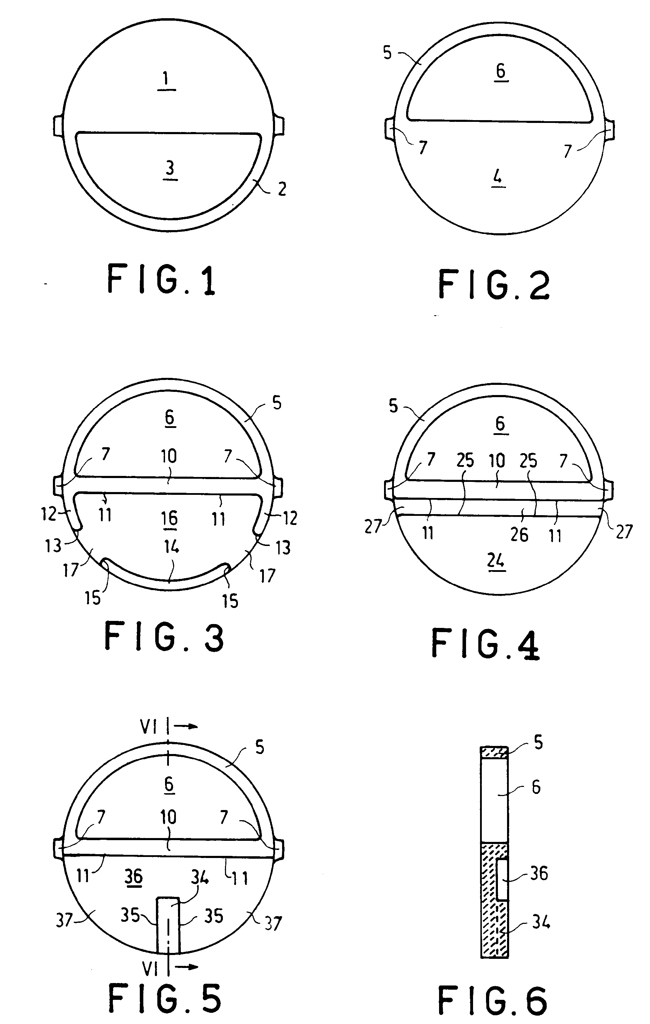

Les figures 1 et 2 montrent la configuration usuelle des deux plaques, respectivement l'une mobile et l'autre fixe, destinées à former un paire de plaques pour un robinet hydraulique du type considéré. La plaque mobile suivant la figure 1 comporte sur sa face de travail une surface rodée 1, laquelle s'étend sur un peu plus que moitié de la plaque et forme un bord périphérique 2 autour d'une ouverture de passage asymétrique 3 qui, à son tour, s'étend sur un peu moins que moitié de la plaque. De son côté, une plaque fixe usuelle suivant la figure 2 comporte sur sa face de travail une surface rodée 4, laquelle s'étend sur un peu plus que moitié de la plaque et forme un bord périphérique 5 autour d'une ouverture de passage asymétrique 6 qui, à son tour, s'étend sur un peu moins que moitié de la plaque. Des saillies 7 peuvent être prévues pour établir la position de la plaque fixe par rapport à un organe de support, non représenté. Dans les formes usuelles décrites, les surfaces 1 et 2 de la plaque mobile, ainsi que les surfaces 4 et 5 de la plaque fixe, sont coplanaires. Dans l'application de l'invention, aucune modification ne doit être portée à la plaque mobile 1-3, laquelle demeure inchangée et peut coopérer indifféremment avec les plaques fixes perfectionnées par l'invention ou avec les plaques fixes usuelles.

Dans le mode de réalisation suivant la figure 3, la plaque fixe comporte encore une ouverture de passage asymétrique 6 entourée par un bord périphérique 5, ainsi que, éventuellement, des saillies de positionnement 7, mais la surface 4 qui, dans la plaque connue suivant la figure 2, était continuellement plane, est maintenant divisée en une part constituée par les parties 10, 12 et 14, laquelle se trouve dans le même plan que la surface du bord périphérique 5 entourant l'ouverture 6, et une part 16 qui, au contraire, est quelque peu baissée, et qui s'ouvre vers la périphérie de la plaque à travers des passages 17.

La partie non baissée 10 complète, avec le bord péripherique 5 demeuré inchangé, le périmètre de l'ouverture de passage 6, et de ce fait autorise la plaque fixe à coopérer correctement avec la plaque mobile 1-3 du point de vue hydraulique. Les parties non baissées 12 et 14, de leur côté, donnent appui à la plaque mobile coopérante, et de ce fait autorisent la plaque fixe à coopérer correctement avec la plaque mobile 1-3 aussi du point de vue mécanique. La partie baissée 16, quant à elle, constitue une région dans laquelle il n'y a pas de contact entre la plaque fixe et la plaque mobile, de sorte que les débris de matériau dur qui peuvent avoir été formés, lorsqu'il se disposent dans cette région, ne donnent lieu à aucun inconvénient. Du reste, ces débris ne peuvent pas demeurer longtemps, ni s'accumuler dans la région 16, parce que celle-ci est ouverte vers la périphérie de la plaque à travers les ouvertures 17. De ce fait, les débris sont emportés par le flux d'eau qui, pendant le fonctionnement du robinet, s'établit en partie aussi à travers ces ouvertures. Enfin on doit remarquer que, pendant les déplacements de la plaque mobile pour le réglage du robinet, les arêtes 13 et 15, qui limitent les parties 12 et 14 de la part de surface non baissée, brossent la surface rodée de la plaque mobile, expulsant ainsi les débris qui y se trouvent. Une action de brossage similaire est effectuée par les arêtes 11 de la partie 10 de la part de surface non baissée.

Dans le mode de réalisation de l'invention suivant la figure 4, la plaque fixe comporte encore une ouverture de passage asymétrique 6 entourée par un bord périphérique 5, ainsi que, éventuellement, des saillies de positionnement 7, mais la surface 4 qui, dans la plaque connue suivant la figure 2, était continuellement plane, est maintenant divisée en une part constituée par les parties 10 et 24, laquelle se trouve dans le même plan que la surface du bord périphérique 5 entourant l'ouverture 6, et une part baissée 26 qui, dans ce cas, est constituée par un sillon, qui s'ouvre vers la périphérie de la plaque à travers ses extrémités 27.

La partie non baissée 10 complète, avec le bord périphérique 5 demeuré inchangé, le périmètre de l'ouverture de passage 6, et de ce fait autorise la plaque fixe à coopérer correctement avec la plaque mobile 1-3 du point de vue hydraulique. La partie non baissée 24, de son côté, donne appui à la plaque mobile coopérante, et de ce fait autorise la plaque fixe à coopérer correctement avec la plaque mobile 1-3 aussi du point de vue mécanique. Le sillon constituant la partie baissée 26, enfin, constitue la région dans laquelle peuvent tomber les débris de matériau dur, qui seront ensuite emportés par le flux d'eau à travers les extrémités 27 du sillon 26. Dans ce cas, ce sont les arêtes 11 de la partie 10 de surface non baissée, et les arêtes 25 de la partie 24 de surface non baissée, qui offrent l'action de brossage de la surface rodée de la plaque mobile.

Enfin, dans le mode de réalisation de l'invention suivant les figures 5 et 6, la plaque fixe comporte encore une ouverture de passage asymétrique 6 entourée par un bord périphérique 5, ainsi que, éventuellement, des saillies de positionnement 7, mais la surface 4 qui, dans la plaque connue suivant la figure 2, était continuellement plane, est maintenant divisée en une part constituée par les parties 10 et 34, laquelle se trouve dans le même plan que la surface du bord périphérique 5 entourant l'ouverture 6, et une part 36 qui, au contraire, est quelque peu baissée, laquelle occupe, dans ce cas, presque moitié de la plaque, et s'ouvre amplement vers la périphérie de la plaque à travers ses régions 37.

La partie non baissée 10 complète, avec le bord périphérique 5 demeuré inchangé, le périmètre de l'ouverture de passage 6, et de ce fait autorise la plaque fixe à coopérer correctement avec la plaque mobile 1-3 du point de vue hydraulique. La partie non baissée 34, de son côté, donne appui à la plaque mobile coopérante, et de ce fait autorise la plaque fixe à coopérer correctement avec la plaque mobile 1-3 aussi du point de vue mécanique. La position de la partie 34, diamétralement opposée de l'ouverture de passage 6, donne la plus grande efficacité à cet effet d'appui, malgré l'extension réduite de la partie 34. La partie baissée 36, enfin, constitue la région dans laquelle peuvent tomber les débris, qui seront ensuite emportés par le flux d'eau à travers les régions périphériques 37. Dans ce cas, ce sont les arêtes 11 de la partie 10 de surface non baissée, mais surtout les arêtes 35 de la partie 34 de surface non baissée, qui offrent l'action de brossage sur la surface rodée de la plaque mobile. La position presque radiale des arêtes 35 leur confère une efficacité spéciale dans cette action. Dans ce mode de réalisation, du fait de la grande extension de la partie baissée 36 ainsi que de son ouverture ample vers l'extérieur dans les régions 37 à la périphérie de la plaque, l'action d'expulsion des débris est rendue particulièrement efficace. Une autre raison de la grande efficacité du mode de réalisation suivant les figures 5 et 6 réside dans le fait que la partie 34 de la part non baissée a une extention très courte dans la direction circonférentielle, et, de ce fait, les débris éventuellement formés par des ébrèchements arrivent rapidement jusqu'aux arêtes 35 et tombent dans la partie baissée 36, de sorte qu'ils sont expulsés avant qu'il puissent avoir endommagé sur une longueur considérable les surfaces de travail des plaques.

Comme on peut le remarquer par ce qui précède, l'invention peut être réalisée en des formes de construction très différentes entr'elles, toutes appropriées pour atteindre le but fixé. De ce fait l'auteur du projet dispose d'un large choix de modes de réalisation possibles qui l'autorisent à appliquer en chaque cas l'invention de la façon la plus appropriée. Bien entendu, d'autres formes sont possibles, en plus de celles qu'on a représenté, et des différentes modifications peuvent être apportées dans le cadre défini par les revendications.

## Revendications

1. Plaque fixe en matériau dur pour un robinet hydraulique, comportant une ouverture de passage (6) unique disposée en position asymétrique par rapport au centre de la plaque et s'étendant sur un peu moins que la moitié de la plaque, la face rodée d'étanchéité hydraulique de ladite plaque fixe étant destinée à coopérer avec la face rodée d'étanchéité hydraulique d'une plaque mobile, qui comporte également une ouverture de passage (3) asymétrique unique s'étendant sur un peu moins que la moitié de la plaque mobile et pouvant être mise en correspondance avec l'ouverture (6) de ladite plaque fixe, caractérisée en ce qu'elle comporte sur sa face rodée d'étanchéité hydraulique une partie de surface (14; 24; 34), ou partie haute, opposée à l'ouverture de passage (6) par rapport au centre de la plaque et disposée au même niveau que la partie de surface (5,10) entourant l'ouverture de passage (6), ainsi qu'une partie de surface (16; 26; 36) abaissée, ou partie basse, non adjacente à ladite ouverture de passage (6), cette partie abaissée, ou basse, étant continue et ouverte (en 17; 27; 37) vers la périphérie de la plaque.

2. Plaque fixe pour robinet suivant la revendication 1, caractérisée en ce que ladite partie basse (16; 26; 36) de la face de travail de la plaque est limitée, par rapport à la partie haute (10; 12,14; 24; 34), par des arêtes (11; 13,15; 25; 35) qui, au moins en partie, ne sont pas concentriques par rapport au centre géométrique de la plaque, et qui réalisent un effet de brossage.

3. Plaque fixe pour robinet suivant la revendication 1, caractérisée en ce qu'au moins une partie des arêtes (11; 13,15; 25; 35), séparant la partie basse (16; 26; 36) de la plaque de la partie (10) haute, est orientée en une direction substantiellement radiale par rapport au centre géométrique de la plaque.

4. Plaque fixe pour robinet suivant la revendication 1, caractérisée en ce que la partie haute de la plaque comporte une partie (10) substantiellement diamétrale et des parties interrompues (12,14) s'étendant le long du bord périphérique de la plaque.

5. Plaque fixe pour robinet suivant la revendication 1, caractérisée en ce que la partie basse (26) de la plaque a la forme d'un sillon presque diamétral par rapport à la plaque.

6. Plaque fixe pour robinet suivant la revendication 1, caractérisée en ce que la partie haute de la plaque comporte une partie (10) substantiellement diamétrale et une partie (34) qui est substantiellement diamétralement opposée de l'ouverture de passage (6) et qui est limitée latéralement par des arêtes (35) substantiellement radiaux par rapport au centre géométrique de la plaque.

7. Plaque fixe pour robinet suivant la revendication 1, caractérisée en ce que la partie haute (34) de la plaque a une extension très limitée en direction circonférentielle.

## Patentansprüche

1. Festes Plättchen aus hartem Material für einen Wasserhahn, mit einer einzigen Durchlassöffnung (6), die in Bezug auf den Mittelpunkt des Plättchens unsymmetrisch angeordnet ist und sich über etwas weniger als die Hälfte des Plättchens erstreckt, wobei die wasserdichte, geläppte Seite des festen Plättchens dazu bestimmt ist, mit der wasserdichten, geläppten Seite eines beweglichen Plättchens in Wirkverbindung zu stehen, das ebenfalls eine einzige unsymmetrische Durchlassöffnung (3) besitzt, die sich über etwas weniger als die Hälfte des beweglichen Plättchens erstreckt und im Bereich der Öffnung (6) des festen Plättchens gebracht werden kann, dadurch gekennzeichnet, dass es an der wasserdichten geläppten Seite einen in Bezug auf den Mittelpunkt des Plättchens der Durchlassöffnung (6) gegenüberliegenden, überhöhten, oder hohen, Oberflächenabschnitt (14; 24; 34) aufweist, der auf derselben Höhe des die Durchlassöffnung (6) umgebenden Oberflächenabschnittes (5, 10) liegt, und dass es ausserdem einen abgesenkten, oder niedrigen, Oberflächenabschnitt (16; 26; 36) aufweist, der nicht an der Durchlassöffnung (6) angrenzt, die abgesenkt ist, wobei dieser abgesenkter oder niedriger Abschnitt durchgehend und (bei 17; 27; 37) auf die Umfangslinie des Plättchens hin offen ist.

2. Festes Plättchen für einen Wasserhahn, nach Anspruch 1, dadurch gekennzeichnet, dass der niedrige Abschnitt (16; 26; 36) der Arbeitsseite des Plättchens in Bezug auf den hohen Abschnitt (10; 12,14; 24; 34) durch Ränder 25; 35) begrenzt ist, die in Bezug auf den geometrischen Mittelpunkt des Plättchens wenigstens teilweise nicht konzentrisch sind und als Bürsten wirken.

3. Festes Plättchen für einen Wasserhahn, nach Anspruch 1, dadurch gekennzeichnet, dass die Ränder (11; 13, 15; 25; 35), die den niedrigen Abschnitt (16; 26; 36) des Plättchens vom hohen Abschnitt (10) trennen, in Bezug auf den geometrischen Mittelpunkt des Plättchens wenigstens zum Teil in im wesentlichen radialer Richtung gerichtet sind.

4. Festes Plättchen für einen Wasserhahn, nach Anspruch 1, dadurch gekennzeichnet, dass der hohe Abschnitt des Plättchens einen im wesentlichen diametralen Teil (10) sowie unterbrochene Teile (12,14) aufweist, die sich entlang dem Umfangsrand des Plättchens erstrecken.

5. Festes Plättchen für einen Wasserhahn, nach Anspruch 1, dadurch gekennzeichnet, dass der niedrige Abschnitt (26) des Plättchens die Form einer in Bezug auf das Plättchen etwa diametralen Rille aufweist.

6. Festes Plättchen für einen Wasserhahn, nach Anspruch 1, dadurch gekennzeichnet, dass der hohe Abschnitt des Plättchens einen im wesentlichen diametralen Teil (10) sowie einen der Durchlassöffnung (6) im wesentlichen diametral entgegengesetzten Teil (34) aufweist, der seitlich durch in Bezug auf den geometrischen Mittelpunkt des Plättchens im wesentlichen radial verlaufende Ränder (35) begrenzt ist.

7. Festes Plättchen für einen Wasserhahn, nach Anspruch 1, dadurch gekennzeichnet, dass der hohe Abschnitt (34) des Plättchens eine in Umfangrichtung stark begrenzte Ausdehnung hat.

## Claims

1. A fixed plate of hard material for a hydraulic valve, comprising a sole passage opening (6) asymmetrically disposed with respect to the plate centre and extending on a little less than a half of the plate, the lapped face for hydraulic seal of said fixed plate being intended to cooperate with the lapped face for hydraulic seal of a movable plate, comprising on its turn a sole asymmetric passage opening (3) which extends on a little less than a half of the movable plate and may be put in register with the opening (6) of said fixed plate, characterized in that it has, on its lapped face for hydraulic seal, a surface portion (14; 24; 34), or upper portion, opposite the passage opening (6) with respect to the plate center, which is situated at the same level as the surface portion (5,10) surrounding the passage opening (6), and has another recessed surface portion (16; 26; 36), or lower portion, not adjacent said passage opening (6), this recessed or lower surface portion being uninterrupted and open (at 17; 27; 37) towards the plate periphery.

2. A fixed plate for a valve, as set forth in Claim 1, characterized in that said lower portion (16; 26; 36) of the face for hydraulic seal of the plate is limited, with respect to the upper portion (10; 12,14; 24; 34), by rims (11; 13,15; 25; 35) which, at least in part, are not concentric with respect to the geometrical center of the plate, and effect a brushing action.

3. A fixed plate for a valve, as set forth in Claim 1, characterized in that at least a part of the rims (11; 13,15; 25; 35) which separate the lower portion (16; 26; 36) of the plate from the upper portion (10) is directed substantially radial with respect to the geometrical center of the plate.

4. A fixed plate for a valve, as set forth in Claim 1, characterized in that the upper portion of the plate comprises a substantially diametrical portion (10) and interrupted portions (12,14) extending along the peripheral border of the plate.

5. A fixed plate for a valve, as set forth in Claim 1, characterized in that the lower portion (26) of the plate has the shape of a groove which is nearly diametrical with respect to the plate.

6. A fixed plate for a valve, as set forth in Claim 1, characterized in that the upper portion of the plate comprises a substantially diametrical part (10) and a part (34) which is diametrically opposite the passage opening (6) and is limited sidewise by rims (35) which are substantially radial with respect to the geometrical center of the plate.

7. A fixed plate for a valve, as set forth in Claim 1, characterized in that the upper portion (34) of the plate has a very limited circumferential extension.
